# EUROPEAN PATENT SPECIFICATION

(11) **EP 4 414 872 B1**
(45) Date of publication and mention of the grant of the patent: **06.05.2026**
(21) Application number: 24162374.3
(22) Date of filing: 08.03.2024
(51) Int. Cl.: G06F 21/54, G06F 21/55

(54) **TECHNIQUES FOR DISPLAYING WARNINGS ABOUT POTENTIALLY PROBLEMATIC SOFTWARE APPLICATIONS**
VERFAHREN ZUR ANZEIGE VON WARNUNGEN ÜBER POTENZIELL PROBLEMSOFTWAREANWENDUNGEN
TECHNIQUES D'AFFICHAGE D'AVERTISSEMENTS CONCERNANT DES APPLICATIONS LOGICIELLES POTENTIELLEMENT PROBLÉMATIQUES

(30) Priority: 23.01.2024 US 202463624261 P
(43) Date of publication of application: 14.08.2024
(73) Proprietor: Apple Inc., Cupertino, CA 95014 (US)
(72) Inventor: JACOBSON, Garrett A., Cupertino, CA, 95014 (US); UNDERWOOD, Daniel C., Cupertino, CA, 95014 (US); VAN LOON, Sunjin C., Cupertino, CA, 95014 (US); MARTEL, Pierre-Olivier J., Cupertino, CA, 95014 (US)
(74) Representative: Lang, Johannes

(56) References cited:
- CN-A- 115 827 702
- US-A1- 2011 197 276
- US-A1- 2018 300 488

## Description

### FIELD

The described embodiments set forth techniques for displaying warnings about potentially problematic software applications. In particular, the techniques involve enabling computing devices to efficiently identify when problematic software applications are being utilized thereon, and to display associated warning and remedial information.

### BACKGROUND

Recent years have shown a proliferation of software applications designed to operate on computing devices such as desktops, laptops, tablets, mobile phones, and wearable devices. The increase is primarily attributable to computing devices running operating systems that enable third-party applications to be developed for and installed on the computing devices (alongside various "native" applications that typically ship with the operating systems). This approach provides innumerable benefits, not least of which includes enabling the vast number of worldwide developers to exercise their creativity by using powerful application programming interfaces (APIs) that are available through the aforementioned operating systems.

Different approaches can be utilized to enable users to install third-party software applications on their computing devices. For example, one approach involves an environment that is, for the most part, unrestricted in that developers are able to write software applications capable of accessing virtually every corner of the operating systems / computing devices onto which they will ultimately be installed. Under this approach, users typically also are able to freely download and install the software applications from any developer and/or distributor. In one light, this approach provides developers and users a considerably high level of flexibility in that they are able to participate in an operating environment that is largely uninhibited. At the same time, this approach is rife with security drawbacks in that faulty, malicious, etc., software applications are pervasive and commonly installed by unassuming users.

To mitigate the foregoing deficiencies, an alternative approach involves implementing an environment that is more restricted in comparison to the foregoing unrestricted environments. In particular, a restricted environment typically involves a software application store that is implemented by an entity that (typically) is also linked to the operating systems and/or computing devices onto which the software applications ultimately will be installed. Under this approach, developers are required to register with the software application store as a first line of vetting. In turn, the developers submit proposed software applications to the software application store for an analysis as to whether the software applications conform to various operating requirements, which constitutes a second line of vetting. Ultimately, when a software application is approved for distribution through the software application store, users are permitted to download the software application onto their computing devices. Accordingly, this approach affords the benefit of considerable security enhancements in comparison to the aforementioned unrestricted environments.

Regardless of which approach, environment, etc., is utilized, malicious developers continue to design software applications that attempt to circumvent existing security measures in order to exploit end users. Moreover, negligent, inexperienced, etc., developers continue to design software applications that can lead to the exploitation of end users. Accordingly, there exists a need for notifying users when they are about to launch potentially problematic software applications on their devices.
CN 115 827 702 A relates to a Bloom filter-based software white list query method.

### SUMMARY

The invention is defined by the appended independent claims. The dependent claims define advantageous embodiments. This Application sets forth techniques for displaying warnings about potentially problematic software applications. In particular, the techniques involve enabling computing devices to identify when problematic software applications are being utilized thereon, and to display associated warning and remedial information.

One embodiment sets forth a method for displaying warnings when potentially problematic software applications are launched on computing devices. According to some embodiments, the method can be implemented by a computing device, and includes the steps of (1) maintaining a probabilistic data structure that is based on a plurality of software application assets that have been flagged as problematic, (2) receiving a first request to install a software application that is comprised of at least one software application asset, (3) installing the software application, (4) identifying, using the probabilistic data structure, that the at least one software application asset has potentially been flagged as problematic, (5) identifying, by interfacing with a management entity, that the at least one software application asset has in fact been flagged as problematic, (6) receiving, from the management entity, an informational package that pertains to the at least one software application asset, (7) assigning the informational package to the software application, (8) receiving a second request to launch the software application, and (9) displaying, in association with launching the software application, a user interface that is derived, at least in part, from the informational package.

Another embodiment sets forth a method for enabling computing devices to display warnings when potentially problematic software applications are launched on the computing devices. According to some embodiments, the method can be implemented by a management entity, and includes the steps of (1) analyzing a plurality of software application assets to flag a subset of software application assets that are problematic, (2) generating a probabilistic data structure based on the subset of software application assets, (3) adding, to a data structure, a respective entry for each software application asset in the subset of software application assets, (4) distributing the probabilistic data structure to at least one computing device, (5) receiving, from the at least one computing device, a request to indicate whether a particular software application asset has in fact been flagged as problematic, (6) determining, by referencing the data structure, that the particular software application asset has in fact been flagged as problematic, and (7) providing, to the at least one computing device, a respective informational package that is based at least in part on the respective entry for the particular software application asset, wherein the respective informational package causes the at least one computing device to, in association with launching a software application that utilizes the particular software application asset, display a warning that is based at least in part on the respective informational package.

Other embodiments include a non-transitory computer readable medium configured to store instructions that, when executed by a processor included in a computing device, cause the computing device to implement the methods and techniques described in this disclosure. Yet other embodiments include hardware computing devices that include processors that can be configured to cause the hardware computing devices to implement the methods and techniques described in this disclosure.

Other aspects and advantages of the techniques will become apparent from the following detailed description taken in conjunction with the accompanying drawings which illustrate, by way of example, the principles of the described embodiments.

This Summary is provided merely for purposes of summarizing some example embodiments so as to provide a basic understanding of some aspects of the subject matter described herein. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE DRAWINGS

The included drawings are for illustrative purposes and serve only to provide examples of possible structures and arrangements for the disclosed apparatuses and methods for providing wireless computing devices. These drawings in no way limit any changes in form and detail that may be made to the embodiments by one skilled in the art without departing from the scope of the embodiments. The embodiments will be readily understood by the following detailed description in conjunction with the accompanying drawings, wherein like reference numerals designate like structural elements.
FIG. 1 illustrates a block diagram of different components of a system for implementing the various techniques described herein, according to some embodiments.
FIG. 2 provides a detailed overview of how the management entity of FIG. 1 can implement the various techniques described herein, according to some embodiments.
FIGS. 3A-3E illustrate conceptual diagrams of an example sequence of implementing the techniques described herein, according to some embodiments.
FIG. 4 illustrates a method for displaying warnings when potentially problematic software applications are launched on computing devices, according to some embodiments.
FIG. 5 illustrates a method for enabling computing devices to display warnings when potentially problematic software applications are launched on the computing devices, according to some embodiments.
FIG. 6 illustrates a detailed view of a representative computing device that can be used to implement various techniques described herein, according to some embodiments.

### DETAILED DESCRIPTION

Representative applications of methods and apparatus according to the present application are described in this section. These examples are being provided solely to add context and aid in the understanding of the described embodiments. It will thus be apparent to one skilled in the art that the described embodiments may be practiced without some or all of these specific details. In other instances, well known process steps have not been described in detail in order to avoid unnecessarily obscuring the described embodiments. Other applications are possible, such that the following examples should not be taken as limiting.

In the following detailed description, references are made to the accompanying drawings, which form a part of the description, and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the scope of the described embodiments.

The described embodiments set forth techniques for displaying warnings about potentially problematic software applications. In particular, the techniques involve enabling computing devices to efficiently identify when problematic software applications are being utilized thereon, and to display associated warning and remedial information.

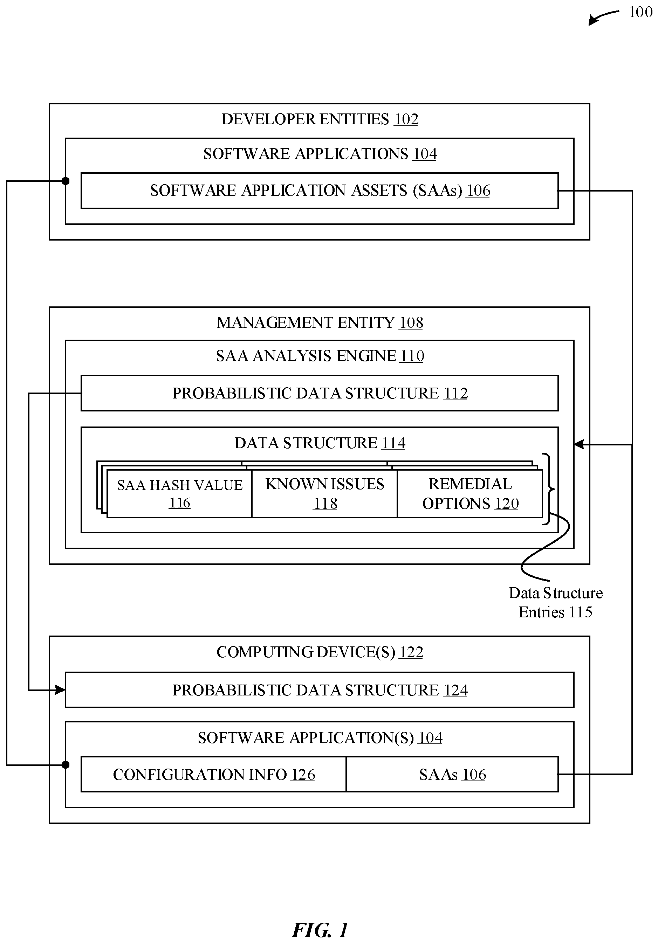

These and other embodiments are discussed below with reference to FIGS. 1-6; however, those skilled in the art will readily appreciate that the detailed description given herein with respect to these figures is for explanatory purposes only and should not be construed as limiting.

FIG. 1 illustrates a block diagram of different components of system 100 for implementing the various techniques described herein, according to some embodiments. As shown in FIG. 1, the system 100 can include one or more developer entities 102, a management entity 108, and a collection of computing devices 122. According to some embodiments, a given developer entity 102 can collectively represent one or more parties involved in the development, management, publication, etc., of software applications 104. For example, the developer entity 102 can collectively represent a company, individual developers, and so on, as well as one or more computing devices that are utilized by such parties. As shown in FIG. 1, each software application 104 can be comprised of one or more software application assets 106, which represent assets of which the software application 104 is comprised, such as code directories, source code files, executable files, configuration files, library files, database files, resource files, markup and stylesheet files, script files, configuration files, documentation files, log files, temporary files, binary data files, license files, version control files, and the like. It is noted that the foregoing examples are not meant to be limiting, and that the software application assets 106 can include any amount, type, form, etc., of information, at any level of granularity, consistent with the scope of this disclosure.

According to some embodiments, the management entity 108 can collectively represent one or more entities with which the computing devices 122 are configured to interact. As shown in FIG. 1, the management entity 108 can implement a software application asset (SAA) analysis engine 110 that can analyze software applications 104 (in particular, the software application assets 106 of which the software applications 104 are comprised). Under one example approach, software applications 104 can be installed onto the computing devices 122 through virtual software application stores (not illustrated in FIG. 1) that manage the software applications 104 and the distribution thereof onto computing devices 122. Under another example approach, software applications 104 can be installed onto computing devices 122 independent from virtual software application stores (referred to herein as "independently-installed software applications 104"). In any case, the SAA analysis engine 110 can be configured to analyze software applications 104 to determine whether they are problematic in nature.

The management entity 108 can obtain the software applications 104 for analysis through any number of approaches. Under one approach, developer entities 102 can provide software applications 104 to the management entity 108 for analysis. For example, software applications 104 can be obtained by the management entity 108 when developer entities 102 submit their applications to be distributed / installed via a virtual software application store implemented by the management entity 108 (or by some other entity). In another example, software applications 104 can be obtained through a service managed by the management entity 108 that enables developer entities 102 to provide, to the management entity 108, software applications 104 that are planned for installation (on computing devices 122) independent from virtual software application stores. In turn, the management entity 108 can provide relevant information to the developer entities 102-e.g., information about malicious features that were detected, information about vulnerabilities that were detected, etc.-so that the developer entities 102 can mitigate the issues prior to distributing their software applications 104. Under another approach, users of computing devices 122 can opt-in to provide independently-installed software applications 104 (or yet-to-be installed software applications 104) to the management entity 108 for analysis. Under yet another approach, the management entity 108 can crawl the Internet to obtain the software applications 104. It is noted that the foregoing examples are not meant to be limiting, and that the software applications 104 can be obtained using any approach, consistent with the scope of this disclosure.

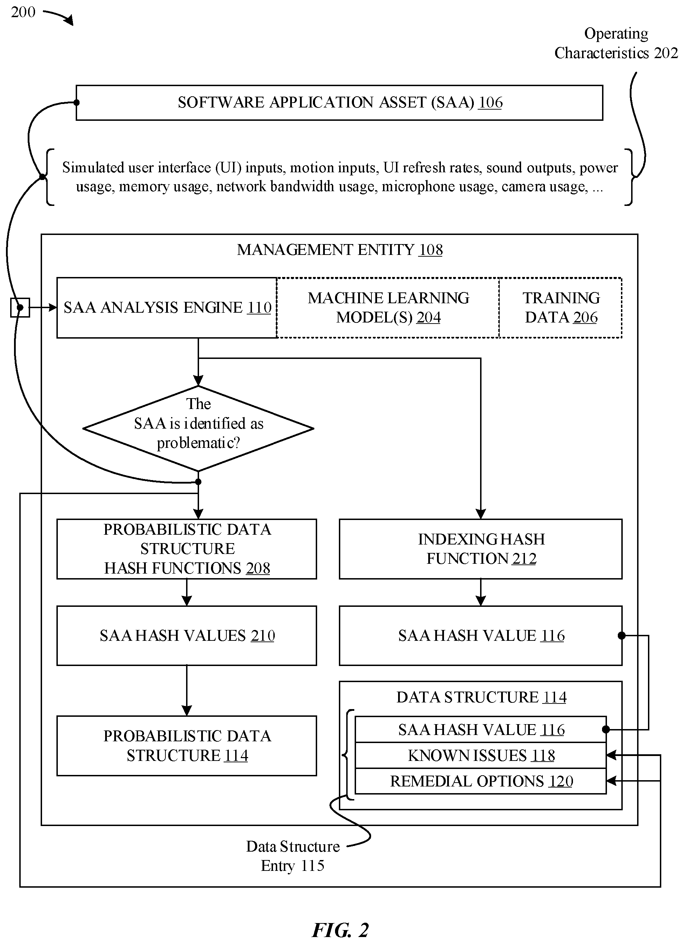

FIG. 2 provides a detailed overview 200 of how the management entity 108 can implement the various techniques described herein, according to some embodiments. As shown in FIG. 2, the SAA analysis engine 110 can be configured to identify whether a given software application asset 106 of a software application 104 is problematic in nature (e.g., includes malicious features, possesses vulnerabilities, etc.). The SAA analysis engine 110 can implement any known approach for effectively analyzing the software application asset 106. For example, the SAA analysis engine 110 can receive information obtained through manual analyses (e.g., tasking one or more individuals with reviewing the software application asset 106), crowd-sourced analyses (e.g., pooled reporting of issues observed in association with the software application asset 106, where, for example, the SAA analysis engine 110 can determine whether a threshold number of reports have been received about the software application asset 106 (in order to identify if the issue is relatively isolated or pervasive)), automated analyses (where the SAA analysis engine 110 and/or other entities analyze the software application asset 106), and so on.

According to some embodiments, the SAA analysis engine 110 can implement one or more machine learning models 204 that are trained (using training data 206) to identify aspects of the software application asset 106 that are problematic in nature. According to some embodiments, the SAA analysis engine 110 can analyze properties of the software application asset 106, operating characteristics 202 associated with the simulated execution / utilization of the software application asset 106, and so on. The properties can include, for example, scripts, executable files, etc., included in the software application asset 106. The operating characteristics 202 can include, for example, simulated user interface (UI) inputs, motion inputs, UI refresh rates, sound outputs, power usage, memory usage, network bandwidth usage, microphone usage, camera usage, and the like. It is noted that the foregoing properties / operating characteristics 202 are merely exemplary and not meant to be limiting, and that any aspect of the software application asset 106, as well as the execution / utilization thereof, can be considered when analyzing the software application asset 106, consistent with the scope of this disclosure.

When a given software application asset 106 is problematic in nature, different actions can be taken to encourage the issue(s) to be mitigated. For example, the management entity 108 can provide a notice to developer entities 102 that distribute the software application asset 106, utilize the software application asset 106, etc., to provoke the developer entities 102 to take appropriate remedial actions. In another example, the management entity 108 can identify software applications 104 that utilize the software application asset 106, and then notify associated entities (e.g., developer entities 102, distributors, etc.) about the issue. In another example, when the management entity 108 implements a software application store, the management entity 108 can identify software applications 104 that utilize the software application asset 106, and implement remedial actions (e.g., notify associated entities, suspend downloads / installations of the software applications 104, etc.). It is noted that the foregoing examples are not meant to be limiting, and that the actions can include any number, type, form, etc., of action(s), at any level of granularity, consistent with the scope of this disclosure.

When the software application asset 106 has been analyzed, the management entity 108 can carry out different registration processes that effectively register the software application asset 106 (with the management entity 108) as (1) one that has been analyzed, and (2) one that has or has not been identified as problematic in nature. In particular, when the software application asset 106 has been identified as problematic in nature, then the management entity 108 registers the software application asset 106 with a probabilistic data structure 112. The probabilistic data structure 112 can represent, for example, a Bloom Filter, a Count-Min Sketch, a HyperLogLog, a Skip Bloom Filter, a Quotient Filter, a Cuckoo Filter, a Randomized Binary Search Tree, a MinHash, a Random Hyperplane Tree, or some combination thereof. It is noted that the foregoing examples are not meant to be limiting, and that the probabilistic data structure 112 can represent any number, type, form, etc., of probabilistic data structure(s), at any level of granularity, consistent with the scope of this disclosure.

In the example implementation illustrated in FIG. 2, the probabilistic data structure 112 can represent a Bloom Filter. In this regard, and according to some embodiments, the management entity 108 can utilize probabilistic data structure hash functions 208 to generate software application asset (SAA) hash values 210. In turn, the SAA hash values 210 can be utilized to register the software application asset 106 with the Bloom Filter. In particular, the SAA hash values 210 can be used to populate one or more entries of the Bloom Filter. As described in greater detail herein, the Bloom Filter can be distributed to computing devices 122 to enable the computing devices 122 to efficiently identify when a given software application 104 that utilizes the software application asset 106 should be flagged on the computing devices 122. In particular, the computing devices 122 can receive the Bloom Filter (illustrated in FIG. 1 as probabilistic data structure 124), the probabilistic data structure hash functions 208 used to form the Bloom Filter, and an indexing hash function 212 (described below in further detail). It is noted that the Bloom Filter provides various benefits, such as enabling computing devices 122 to efficiently identify whether warnings should be displayed in association with launching software applications 104, while at the same time inhibiting malicious entities from gleaning information about the software application assets 106 on which the Bloom Filter is based.

As described herein, a given computing device 122 can utilize the Bloom Filter to efficiently determine whether a given software application asset 106-e.g., one included in a software application 104 that is being installed on the computing device 122-should be flagged for being problematic in nature. In particular, the computing device 122 can provide the software application asset 106 to the probabilistic data structure hash functions 208 to generate SAA hash values 210, and then utilize the SAA hash values 210 to determine whether the software application asset 106 (1) is definitely not registered with the Bloom Filter (and therefore has not (at least yet) been identified as problematic in nature), or (2) may be registered with the Bloom Filter (and therefore may have been identified as problematic in nature).

According to some embodiments, when the software application asset 106 may be registered with the Bloom Filter, the computing device 122 can be configured to interface with the management entity 108 (e.g., via at least one secure communications channel), and issue a request for a definitive answer about whether the software application asset 106 has in fact been identified as problematic in nature. In some embodiments, the computing device 122 communicates with the management entity 108 using iCloud Private Relay. In some embodiments, the computing device 122 communicates with the management entity 108 using Oblivious HTTP. In some embodiments, the computing device 122 communicates with the management entity 108 using one or more proxies that ensure privacy by anonymizing Internet Protocol (IP) addresses of the computing device 122. In some embodiments, the computing device 122 communicates with the management entity 108 using a virtual private network. In some embodiments, the computing device 122 communicates with the management entity 108 using a private information retrieval (PIR) protocol. In some embodiments, the computing device 122 communicates with the management entity 108 using any suitable communication method that promotes security and/or privacy. It is noted that the foregoing examples are not meant to be limiting, and that the computing device 122 and the management entity 108 can communicate with one another using any approach, consistent with the scope of this disclosure.

iCloud Private Relay provides a highly secure framework for enabling a first device (e.g., a computing device 122) to communicate with a second device (e.g., a management entity 108) while significantly constraining the ability for intermediate parties (e.g., an Internet Service Provider) to glean information about the first device, the second device, and/or data transmitted therebetween. When iCloud Private Relay is utilized by the first device, requests sent by the first device to the second device are sent through two separate and distinct Internet relays. Under this approach, the Internet Protocol (IP) address of the first device is visible to a first Internet relay (e.g., one operated by Apple, Inc.) and to the ISP. However, Domain Name Service (DNS) records associated with the requests are encrypted, so neither the first Internet relay-nor the ISP-can identify information about the second device (e.g., a name, an IP address, etc.) included in the requests. To achieve this limitation, the second Internet relay-which can be operated by a third-party provider-generates a temporary IP address, decrypts the information about the second device, and then effectively establishes one or more secure communication channels between the first and second device by way of the ISP, the first Internet Relay, and the second Internet relay. The secure communication channels can implement the latest Internet standards to enable highly efficient and protected communications to be carried out between the first and second devices.

According to some embodiments, the aforementioned techniques can involve a computing device utilizing a private relay protocol to establish a secure communication channel between the computing device and a management entity, where (1) the private relay protocol utilizes at least first and second Internet relays that are logically disposed the computing device and the management entity, (2) a first address of the computing device is accessible to the first Internet relay but not to the second Internet relay, and (3) a second address of the management entity is accessible to the second Internet relay but not to the first Internet relay. Under this configuration, the computing device and the first Internet relay transmit information between one another, the first Internet relay and the second Internet relay transmit information between one another, and the second Internet relay and the management entity communicate information between one another.

Turning back now to FIG. 2, when the management entity 108 receives the aforementioned request, the management entity 108 is tasked with definitively determining whether the software application asset 106 was, under a prior analysis procedure, identified as being problematic in nature. However, because the Bloom Filter possessed by the management entity 108 is also probabilistic in nature (and therefore cannot be utilized to obtain a definitive answer), the Bloom Filter cannot be utilized to obtain a definitive answer. Accordingly, the aforementioned registration processes (associated with the software application asset 106) can include registering each analyzed software application asset 106 within a data structure 114 that is managed by the management entity 108. According to some embodiments, the management entity 108 can be configured to utilize an indexing hash function 212 to generate a software application asset (SAA) hash value 116 for the software application asset 106. In turn, the SAA hash value 116 can be used to form an index for a data structure entry 115 (within the data structure 114) that corresponds to the software application asset 106.

As shown in FIG. 2, the data structure entry 115 can also include known issues 118, which can include any amount, type, form, etc., of information, at any level of granularity, that effectively documents the problematic nature of the software application asset 106. For example, the known issues 118 can indicate that the software application asset 106 is believed to be malicious, susceptible to attacks, and so on. The known issues 118 can include any amount, type, form, etc., of information, such as hyperlinks to knowledge base pages that provide a detailed breakdown of the issues associated with the software application asset 106. As also shown in FIG. 2, the data structure entry 115 can include remedial options 120, which can include any amount, type, form, etc., of information, at any level of granularity, that effectively documents remedial options, if any, that may be utilized to mitigate the problematic nature of the software application asset 106. For example, the remedial options 120 can store information about different software applications 104 that utilize the software application asset 106, and whether updated versions of the software applications 104 are available that utilize an updated version of the software application asset 106 that is not problematic, do not utilize the software application asset 106 at all, and so on. Again, the foregoing examples are not meant to be limiting, and those having skill in the art will readily appreciate that the data structure entry 115 can store additional information about the software application asset 106 (e.g., timestamp information indicating when the SAA analysis engine 110 analyzed the software application asset 106), entities associated with the software application asset 106 (e.g., developer entities 102, distributors, etc.), software applications 104 known to utilize the software application asset 106, and so on.

As a brief aside, it is noted that data structure entries 115 can be generated (using the techniques described herein) for software application assets 106 that are not identified as being problematic in nature. For example, when the SAA analysis engine 110 does not identify any issues associated with a given software application asset 106, the management entity 108 can generate a SAA hash value 116 (using the indexing hash function 212), and create a data structure entry 115 that includes the SAA hash value 116. Additionally, the management entity 108 can indicate, in the known issues 118 of the data structure entry 115, that no issues were identified. In this manner, the SAA analysis engine 110 can, prior to analyzing any software application asset 106, generate a corresponding SAA hash value 116 for the software application asset 106 (using the indexing hash function 212), and attempt to look up the SAA hash value 116 within the data structure 114. In this manner, when the SAA analysis engine 110 observes that the software application asset 106 was previously analyzed and determined to not be problematic in nature, the SAA analysis engine 110 can avoid performing redundant analyses.

Accordingly, and as previously described herein, when the computing device 122 issues, to the management entity 108, a request for a definitive answer about whether the software application asset 106 has in fact been identified as problematic in nature, the computing device 122 can utilize the indexing hash function 212 to generate a corresponding SAA hash value 116, and include the SAA hash value 116 in the request. It is noted that alternative approaches can be utilized, such as providing a copy of the software application asset 106 in the request (where, in turn, the management entity 108 can utilize the indexing hash function 212 to generate a corresponding SAA hash value 116). In any case, the management entity 108 can reference the SAA hash value 116 against the data structure 114 to effectively identify whether the software application asset 106 was determined to be problematic in nature. In particular, when (1) no such data structure entry 115 exists, or (2) when a data structure entry 115 exists and indicates that the software application asset 106 was not determined to be problematic in nature, then the management entity 108 can provide a definitive answer (i.e., a response) to the computing device 122 indicating that (1) the software application asset 106 has not yet been analyzed, or (2) the software application asset 106 was not identified as problematic in nature, respectively. Alternatively, when the data structure entry 115 exists-and when the known issues 118 identify that the software application asset 106 has been identified as problematic in nature-then the management entity 108 can provide, to the computing device 122, a response indicating that the software application asset 106 has been identified as problematic in nature.

According to some embodiments, when the software application asset 106 has been identified as problematic in nature, the response can include an informational package (or a link thereto) that includes information obtained from, derived from, etc., the data structure entry 115, as well as any other information that is relevant. When the computing device 122 receives the response, the computing device 122 can store the informational package (or a link thereto) into configuration information 126 associated with the software application 104. In this manner-and, as described in greater detail herein-the computing device 122 can optionally display warning information, remedial information, etc., in association with the utilization of the software application 104 on the computing device 122.

According to some embodiments, and as described herein, the SAA analysis engine 110 can analyze software application assets 106 on an ongoing basis, which in turn can involve performing updates to the probabilistic data structure 112, the data structure 114, and so on. In this regard, scenarios can arise where the probabilistic data structure 112 is more up-to-date than probabilistic data structures 124 stored on computing devices 122. Accordingly, the management entity 108 can be configured to generate update packages for distribution to the computing devices 122, where the update packages include information that, when processed, causes the probabilistic data structures 124 stored on the computing devices 122 to reflect the probabilistic data structure 112. In some embodiments, the update package includes an incremental update to the probabilistic data structure 124, rather than a full replacement for the probabilistic data structure 124. Such incremental update packages can include updates to include information for additional software applications 104, and/or updated information for software applications 104 already identified in the probabilistic data structure 124. In some embodiments, the probabilistic data structure 124 is updated via a full update package that contains an updated version of the probabilistic data structure 112 (rather than an incremental update). In some embodiments, the full update package includes updates that change one or more of the accuracy of the probabilistic data structure 124, the size of the probabilistic data structure 124, query performance for the probabilistic data structure 124, and so on. In some embodiments, incremental updates are performed at a first interval (e.g., daily). In some embodiments, a full update is performed when needed to update one of the accuracy of the probabilistic data structure 124, the size of the probabilistic data structure 124, query performance for the probabilistic data structure 124, and the like.

It should be understood that the various components of the computing devices illustrated in FIG. 1 are presented at a high level in the interest of simplification. For example, although not illustrated in FIG. 1, it should be appreciated that the various computing devices can include common hardware / software components that enable the above-described software entities to be implemented. For example, each of the computing devices can include one or more processors that, in conjunction with one or more volatile memories (e.g., a dynamic random-access memory (DRAM)) and one or more storage devices (e.g., hard drives, solid-state drives (SSDs), etc.), enable the various software entities described herein to be executed. Moreover, each of the computing devices can include communications components that enable the computing devices to transmit information between one another.

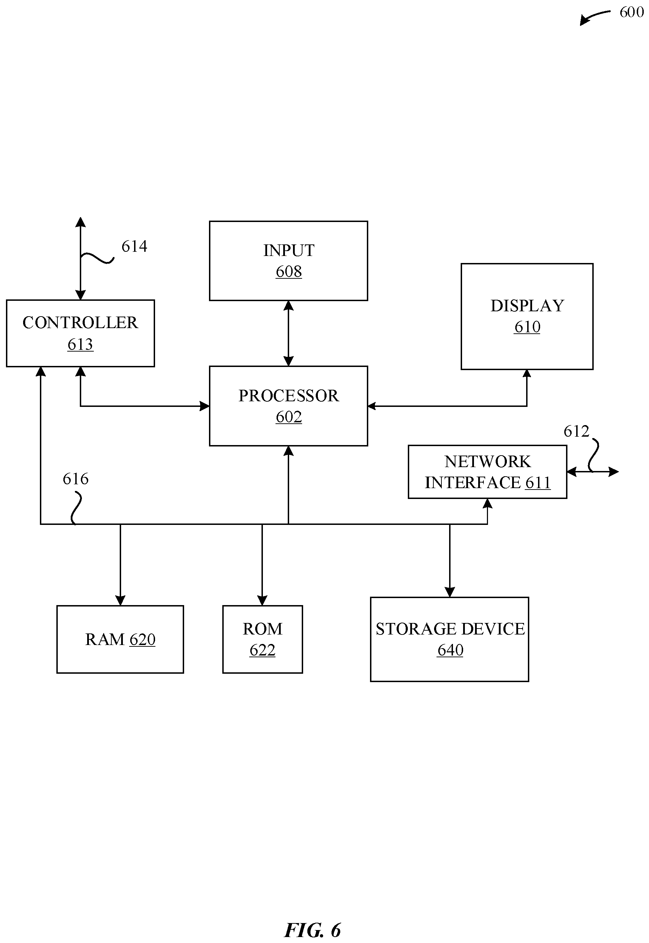

A more detailed explanation of these hardware components is provided below in conjunction with FIG. 6. It should additionally be understood that the computing devices can include additional entities that enable the implementation of the various techniques described herein without departing from the scope of this disclosure. It should additionally be understood that the entities described herein can be combined or split into additional entities without departing from the scope of this disclosure. It should further be understood that the various entities described herein can be implemented using software-based or hardware-based approaches without departing from the scope of this disclosure.

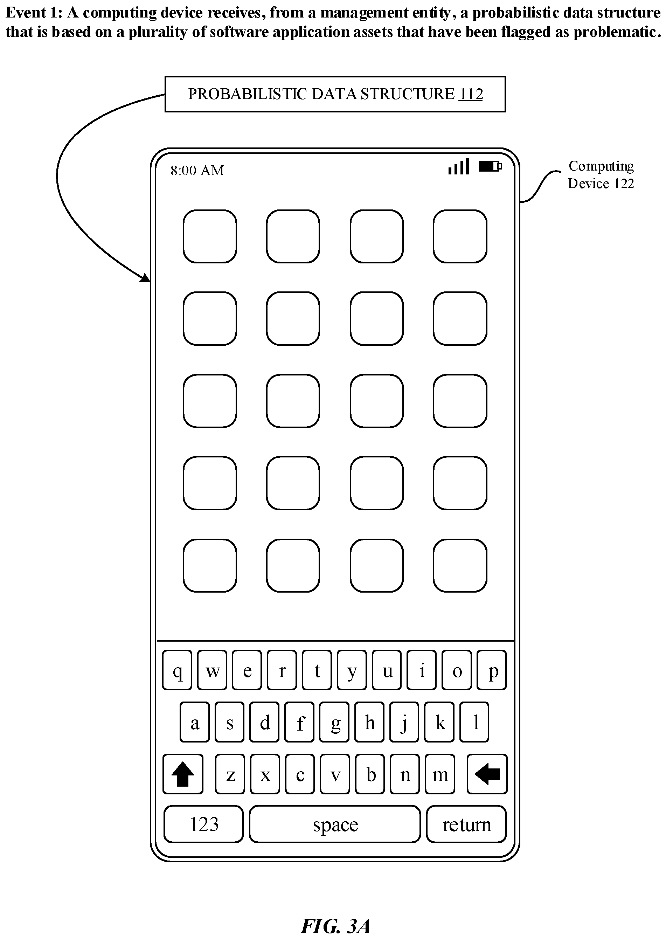

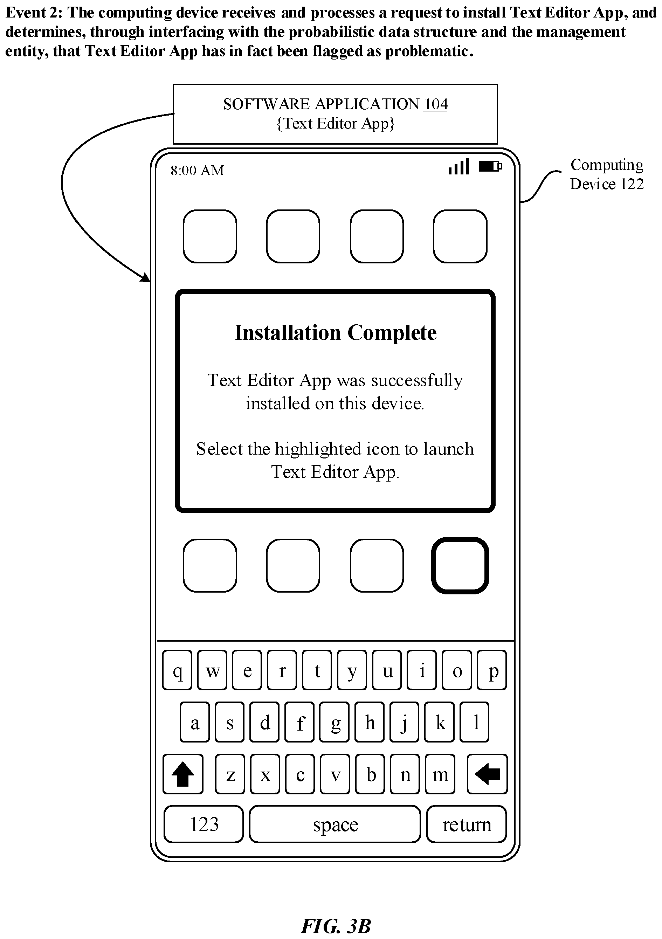

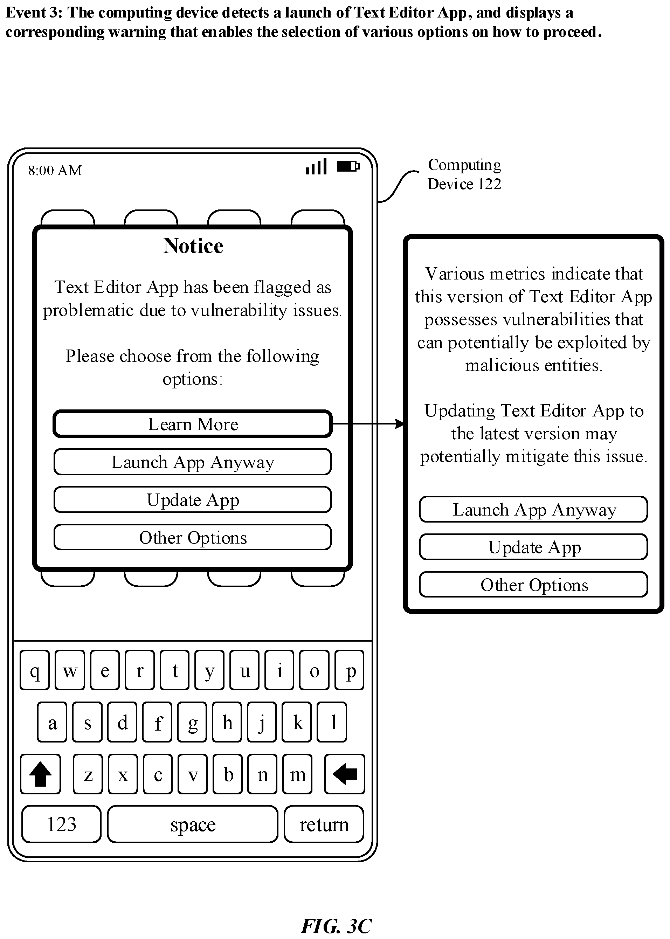

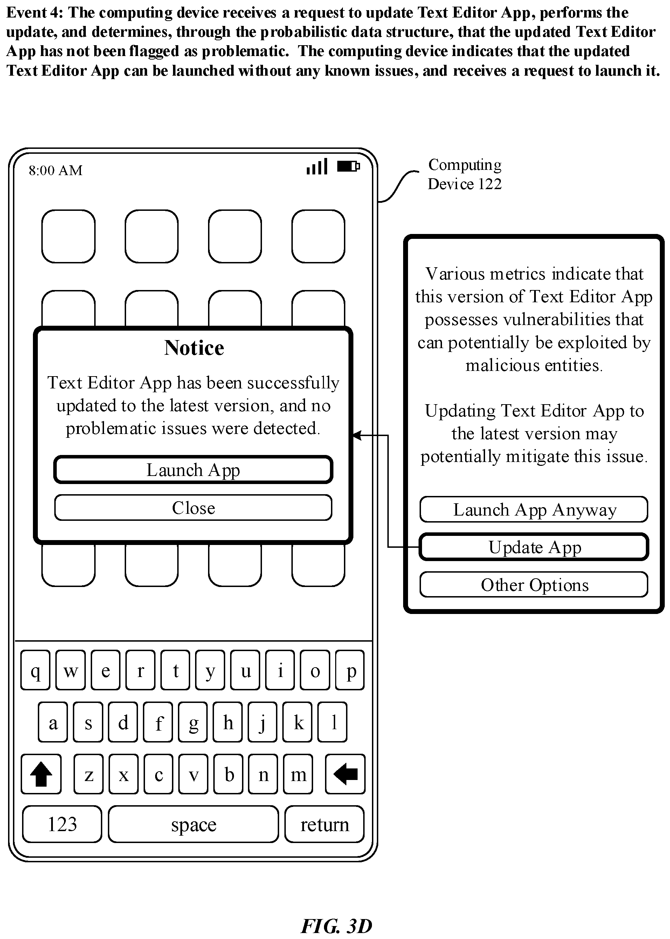

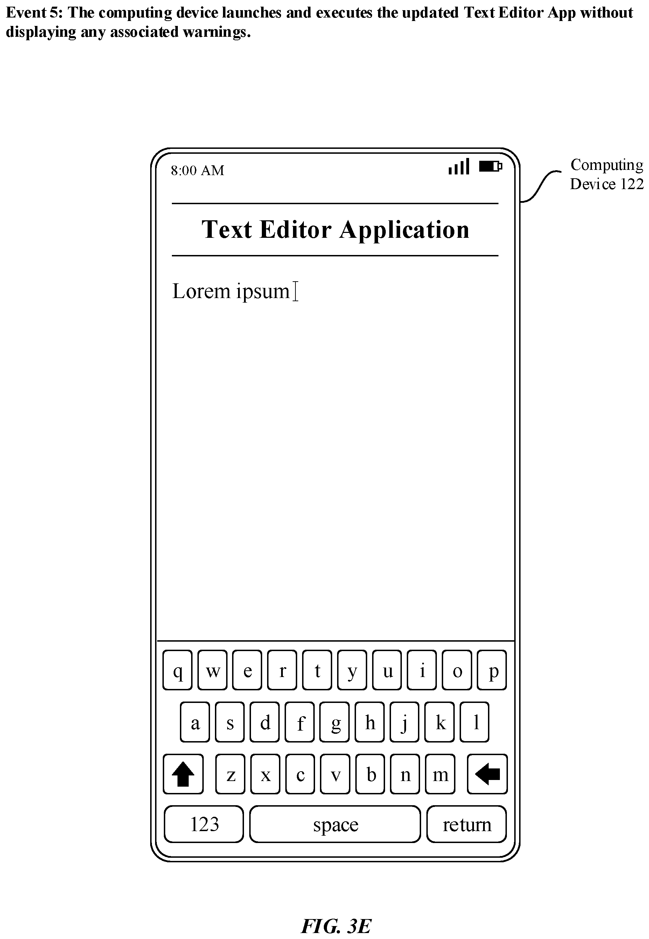

Accordingly, FIG. 1 provides an overview of the manner in which the system 100 can implement the various techniques described herein, according to some embodiments. A more detailed breakdown of the manner in which these techniques can be implemented will now be provided below in conjunction with FIGS. 3-6.

FIGS. 3A-3E illustrate conceptual diagrams of an example sequence of implementing the techniques described herein, according to some embodiments. As shown in FIG. 3A, a first event involves a computing device 122 receiving, from the management entity 108, a probabilistic data structure 112 that is based on a collection of software application assets 106 that have been flagged as problematic (e.g., in accordance with the techniques described herein). The computing device 122 can receive the probabilistic data structure 112 under a number of scenarios, e.g., when the computing device 122 undergoes an initial setup procedure, when the computing device 122 attempts to install a first software application 104 using independent-installation approaches, e.g., independent from installation by way of a virtual software application store, and so on. It is noted that the foregoing examples are not meant to be limiting, and that the probabilistic data structure 112 can be provided to computing device 122 under any number, type, form, etc., of condition(s), at any level of granularity, consistent with the scope of this disclosure. In any case, the computing device 122 stores the probabilistic data structure 112 as a probabilistic data structure 124 on the computing device 122.

Turning now to FIG. 3B, a second event involves the computing device 122 receiving and processing a request to install a software application 104-in particular, a Text Editor App-and determines, through interfacing with the probabilistic data structure 124 and the management entity 108 (e.g., in accordance with the techniques described herein), that the Text Editor App has in fact been flagged for being problematic in nature. This step can involve, for example, the computing device 122 receiving, from the management entity 108, an informational package (or a link thereto) that identifies the issues associated with the software application 104 (e.g., at least one software application asset 106 thereof). In turn, the computing device 122 updates the configuration information 126 associated with the software application 104 to reflect the informational package (or a link thereto). In some embodiments, the computing device 122 updates a file system attribute for a file system that contains the executable file for the software application 104, to reflect the informational package. As described below, the configuration information 126 can be referenced by the computing device 122 in conjunction with receiving requests to launch the software application 104. In this manner, the computing device 122 is able to determine whether appropriate warnings, if any, should be displayed.

Turning now to FIG. 3C, a third event involves the computing device 122 detecting a launch of the Text Editor App, and displaying a corresponding warning user interface (UI) that enables the selection of various options on how to proceed. As shown in FIG. 3C, the warning UI indicates that the Text Editor App has been flagged due to vulnerability issues, and includes (1) an option to learn more about the issues, (2) an option to launch the Text Editor App anyway (i.e., disregard the warning), (3) an option to update the Text Editor App, and (4) an option to select from other options (e.g., delete the Text Editor App, visit a website associated with a developer entity 102 associated with the Text Editor App, contact technical support, etc.). The option to update the Text Editor App can be available, for example, when the management entity 108 has identified that an updated version of the Text Editor App does not utilize the software application asset / directories 106 that were identified as problematic in nature. Those having skill in the art will appreciate that other options can be included in the warning (e.g., contacting a support service), consistent with the scope of this disclosure. In the example scenario illustrated in FIG. 3C, a user of the computing device 122 selects the option to learn more about the issues, and a supplemental UI is displayed. As shown in FIG. 3C, the supplemental UI includes a more detailed explanation about why the Text Editor App was flagged, and also includes the options that were available in the warning UI.

Turning now to FIG. 3D, a fourth event involves the computing device 122 receiving a request to update the Text Editor App, performing the update, and determining, through the probabilistic data structure 124, that the updated Text Editor App has not been flagged for being problematic in nature. The computing device 122 indicates, via a notice UI, that the updated Text Editor App can be launched without any known issues, and receives a request to launch it. In turn, and as shown in FIG. 3E, a fifth event involves the computing device 122 launching the Text Editor App without displaying any associated warnings.

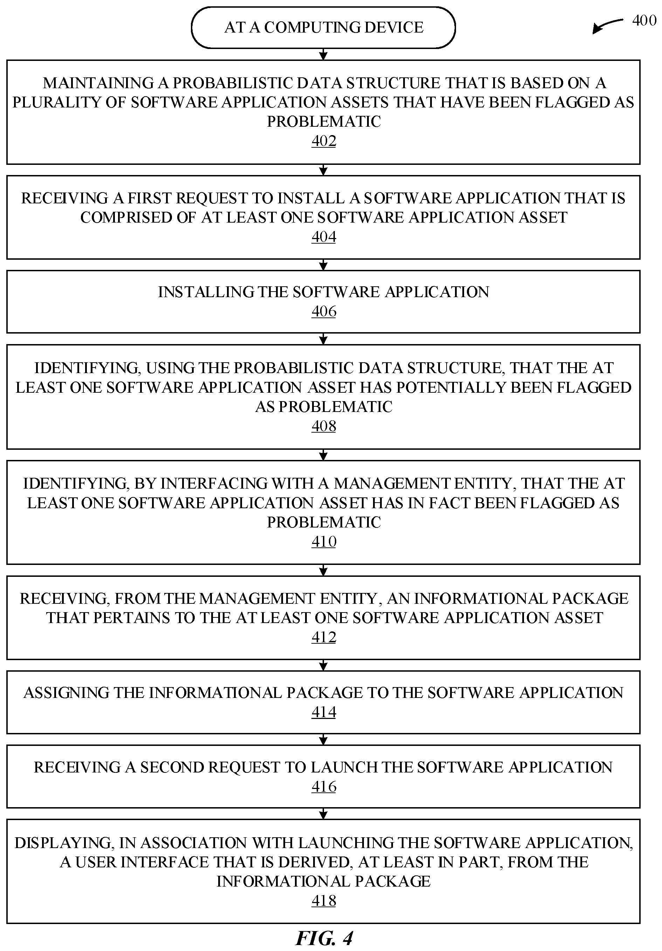

FIG. 4 illustrates a method 400 for displaying warnings when potentially problematic software applications are launched on computing devices, according to some embodiments. As shown in FIG. 4, the method 400 begins at step 402, where the computing device 122 maintains a probabilistic data structure that is based on a plurality of software application assets that have been flagged as problematic (e.g., as described above in conjunction with FIGS. 2 and 3A). In some embodiments, the probabilistic data structure is one of a Bloom Filter, a Count-Min Sketch, a HyperLogLog, a Skip Bloom Filter, a Quotient Filter, a Cuckoo Filter, a Randomized Binary Search Tree, a MinHash, a Random Hyperplane Tree. In some embodiments, maintaining the probabilistic data structure includes receiving and applying an incremental update to the probabilistic data structure. In some embodiments, maintaining the probabilistic data structure includes receiving and applying a full update to the probabilistic data structure. In some embodiments, incremental updates are received periodically (e.g., daily). In some embodiments, full updates are received as needed (e.g., to update one or more properties of the accuracy of the probabilistic data structure, the size of the probabilistic data structure, query performance for the probabilistic data structure, and the like.

At step 404, the computing device 122 receives a first request to install a software application that is comprised of at least one software application asset (e.g., as described above in conjunction with FIGS. 2 and 3B). At step 406, the computing device 122 installs the software application (e.g., as described above in conjunction with FIGS. 2 and 3B). At step 408, the computing device 122 identifies, using the probabilistic data structure, that the at least one software application asset has potentially been flagged as problematic (e.g., as described above in conjunction with FIGS. 2 and 3B). At step 410, the computing device 122 identifies, by interfacing with a management entity, that the at least one software application asset has in fact been flagged as problematic (e.g., as described above in conjunction with FIGS. 2 and 3B). In some embodiments, the computing device communicates with the management entity using iCloud Private Relay. In some embodiments, the computing device communicates with the management entity using one or more proxies that ensure privacy by anonymizing IP addresses of the computing device. In some embodiments, the computing device communicates with the management entity using a virtual private network. In some embodiments, the computing device communicates with the management entity using a private information retrieval (PIR) protocol. In some embodiments, the computing device communicates with the management entity using any suitable communication method that promotes security and/or privacy.

At step 412, the computing device 122 receives, from the management entity, an informational package that pertains to the at least one software application asset (e.g., as described above in conjunction with FIGS. 2 and 3B). At step 414, the computing device 122 assigns the informational package to the software application (e.g., as described above in conjunction with FIGS. 2 and 3C). In some embodiments, the computing device updates a file system attribute for a file system that contains the executable file for the software application, to reflect the informational package. At step 416, the computing device 122 receives a second request to launch the software application (e.g., as described above in conjunction with FIGS. 2 and 3C). In some embodiments, at step 416, the computing device 122 checks the file system attributes of the file system that contains the executable file for the software application for the presence of an attribute for the informational package. At step 418, the computing device 122 displays, in association with launching the software application and identifying the presence of the attribute at step 416, a user interface that is derived, at least in part, from the informational package (e.g., as described above in conjunction with FIGS. 2 and 3C-3D). In some embodiments, if the attribute is not detected at step 416, then the computing device 122 does not display a user interface that is derived from the informational package.

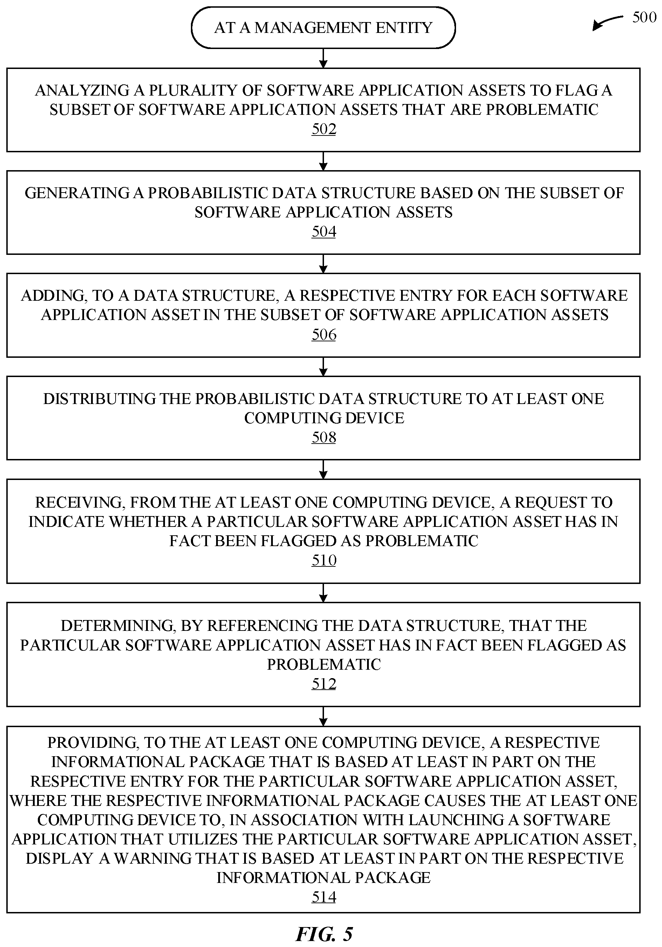

FIG. 5 illustrates a method 500 for enabling computing devices to display warnings when potentially problematic software applications are launched on the computing devices, according to some embodiments. As shown in FIG. 5, the method 500 begins at step 502, where the management entity 108 analyzes a plurality of software application assets to flag a subset of software application assets that are problematic (e.g., as described above in conjunction with FIGS. 2 and 3A).

At step 504, the management entity 108 generates a probabilistic data structure based on the subset of software application assets (e.g., as described above in conjunction with FIGS. 2 and 3A). At step 506, the management entity 108 adds, to a data structure, a respective entry for each software application asset in the subset of software application assets (e.g., as described above in conjunction with FIGS. 2 and 3A). At step 508, the management entity 108 distributes the probabilistic data structure to at least one computing device (e.g., as described above in conjunction with FIGS. 2 and 3A). At step 510, the management entity 108 receives, from the at least one computing device, a request to indicate whether a particular software application asset has in fact been flagged as problematic (e.g., as described above in conjunction with FIGS. 2 and 3B-3C).

At step 512, the management entity 108 determines, by referencing the data structure, that the particular software application asset has in fact been flagged as problematic (e.g., as described above in conjunction with FIGS. 2 and 3B-3C). At step 514, the management entity 108 provides, to the at least one computing device, a respective informational package that is based at least in part on the respective entry for the particular software application asset, where the respective informational package causes the at least one computing device to, in association with launching a software application that utilizes the particular software application asset, display a warning that is based at least in part on the respective informational package (e.g., as described above in conjunction with FIGS. 2 and 3D-3E).

FIG. 6 illustrates a detailed view of a computing device 600 that can be used to implement the various components described herein, according to some embodiments. In particular, the detailed view illustrates various components that can be included in the computing devices 122 of FIG. 1, as well as computing devices operated by the developer entities 102 and the management entity 108 of FIG. 1.

As shown in FIG. 6, the computing device 600 can include a processor 602 that represents a microprocessor or controller for controlling the overall operation of computing device 600. The computing device 600 can also include a user input device 608 that allows a user of the computing device 600 to interact with the computing device 600. For example, the user input device 608 can take a variety of forms, such as a button, keypad, dial, touch screen, audio input interface, visual/image capture input interface, input in the form of sensor data, etc. Furthermore, the computing device 600 can include a display 610 (screen display) that can be controlled by the processor 602 to display information to the user. A data bus 616 can facilitate data transfer between at least a storage device 640, the processor 602, and a controller 613. The controller 613 can be used to interface with and control different equipment through an equipment control bus 614. The computing device 600 can also include a network/bus interface 611 that couples to a data link 612. In the case of a wireless connection, the network/bus interface 611 can include a wireless transceiver.

The computing device 600 also includes a storage device 640, which can comprise a single disk or a plurality of disks (e.g., SSDs), and includes a storage management module that manages one or more partitions within the storage device 640. In some embodiments, storage device 640 can include flash memory, semiconductor (solid state) memory or the like. The computing device 600 can also include a Random-Access Memory (RAM) 620 and a Read-Only Memory (ROM) 622. The ROM 622 can store programs, utilities, or processes to be executed in a non-volatile manner. The RAM 620 can provide volatile data storage, and stores instructions related to the operation of the computing devices described herein.

The various aspects, embodiments, implementations, or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data that can be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

As described herein, one aspect of the present technology is the gathering and use of data available from various sources to improve user experiences. The present disclosure contemplates that in some instances, this gathered data may include personal information data that uniquely identifies or can be used to contact or locate a specific person. Such personal information data can include demographics data, location-based data, telephone numbers, email addresses, home addresses, data or records relating to a user's health or level of fitness (e.g., vital signs measurements, medication information, exercise information), date of birth, smart home activity, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select to provide only certain types of data that contribute to the techniques described herein. In addition to providing "opt in" and "opt out" options, the present disclosure contemplates providing notifications relating to the access or use of personal information. For instance, a user may be notified that their personal information data may be accessed and then reminded again just before personal information data is accessed.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

## Claims

1. A method for enabling computing devices (122, 600) to display warnings when software applications (104) are launched on the computing devices (122, 600), the method comprising, by a management entity (108):
analyzing (502) a plurality of software application assets (106) to flag a subset of software application assets (106), SAAs;
generating (504) a bloom filter based on the subset of SAAs;
adding (506), to a data structure (112, 114, 124), a respective entry (115) for each SAA in the subset of SAAs;
distributing (508) the bloom filter to at least one computing device of the computing devices (122, 600);
receiving (510), from the at least one computing device, a request to indicate whether a particular SAA has in fact been flagged, wherein the request is generated by the at least one computing device in response to identifying, using the bloom filter distributed to the at least one computing device, that an SAA has potentially been flagged;
determining (512), by referencing the data structure (112, 114, 124), that the particular SAA has in fact been flagged;
providing (514), to the at least one computing device, a respective informational package that is based at least in part on the respective entry (115) for the particular SAA, wherein the informational package is configured to be incorporated into a file system attribute associated with the software application that is stored on the at least one computing device, wherein the respective informational package causes the at least one computing device to, in association with launching a software application (104) that utilizes the particular SAA on the at least one computing device, display a warning that is based at least in part on the respective informational package when the file system attribute is accessed as part of launching the software application.

2. The method of claim 1, wherein generating the bloom filter based on the subset of SAAs comprises, for each SAA in the subset of SAAs:
generating, using a plurality of hash functions (208), respective hash values (210) for the SAA; and
configuring the bloom filter in accordance with the respective hash values (210).

3. The method of claim 1, wherein, within the data structure (112, 114, 124), the respective entry (115) for each SAA in the subset of SAAs includes:
(1) a respective hash value (116, 210) for the SAA; and
(2) the respective informational package, wherein the respective informational package includes:
first information about why the SAA was flagged, and
second information about remedial options, if any, available for mitigating a cause of the SAA being flagged.

4. The method of claim 3, wherein, for a given entry (115) within the data structure (112, 114, 124):
the first information is obtained using crowdsourcing, analytics services, machine learning models trained to identify natures of SAAs, or some combination thereof; and
the second information is obtained by determining whether an updated version of the software application (104) is available and does not utilize the particular SAA.

5. The method of claim 1, wherein the plurality of SAAs comprises:
code directories, source code files, executable files, configuration files, library files, database files, resource files, markup and stylesheet files, script files, configuration files, documentation files, log files, temporary files, binary data files, license files, version control files, or some combination thereof.

6. The method of claim 2, further comprising:
analyzing a plurality of supplemental SAAs to flag a supplemental subset of SAAs;
generating a supplemental bloom filter based on the supplemental subset of SAAs;
generating an update package for updating the bloom filter to reflect the supplemental bloom filter;
adding, to the data structure (112, 114, 124), a respective entry (115) for each supplemental SAA in the supplemental subset of SAAs; and
distributing the update package to the at least one computing device to cause the at least one computing device to update the bloom filter to reflect the supplemental bloom filter.

7. The method of claim 1, wherein the request and the respective informational package are transmitted using a secure communication channel that is formed between the management entity (108) and the at least one computing device using a private relay protocol.

8. A system (100) comprising a management entity (108) and computing devices (122, 600), the management entity configured to enable the computing devices (122, 600) to display warnings when software applications (104) are launched on the computing devices (122, 600), the management entity (108) comprising:
at least one processor; and
at least one memory storing instructions that, when executed by the at least one processor, cause the management entity (108) to carry out steps that include:
analyzing (502) a plurality of software application assets (106) to flag a subset of software application assets (106), SAAs;
generating (504) a bloom filter based on the subset of SAAs;
adding (506), to a data structure (112, 114, 124), a respective entry (115) for each SAA in the subset of SAAs;
distributing (508) the bloom filter to at least one computing device of the computing devices (122, 600);
receiving (510), from the at least one computing device, a request to indicate whether a particular SAA has in fact been flagged, wherein the request is generated by the at least one computing device in response to identifying, using the bloom filter distributed to the at least one computing device, that an SAA has potentially been flagged;
determining (512), by referencing the data structure (112, 114, 124), that the particular SAA has in fact been flagged;
providing (514), to the at least one computing device, a respective informational package that is based at least in part on the respective entry (115) for the particular SAA, wherein the informational package is configured to be incorporated into a file system attribute associated with the software application that is stored on the at least one computing device, wherein the respective informational package causes the at least one computing device to, in association with launching a software application (104) that utilizes the particular SAA on the at least one computing device, display a warning that is based at least in part on the respective informational package when the file system attribute is accessed as part of launching the software application.

9. The system (100) of claim 8, wherein generating the bloom filter based on the subset of SAAs comprises, for each SAA in the subset of SAAs:
generating, using a plurality of hash functions (208), respective hash values (210) for the SAA; and
configuring the bloom filter in accordance with the respective hash values (210).

10. The system (100) of claim 8, wherein, within the data structure (112, 114, 124), the respective entry (115) for each SAA in the subset of SAAs includes:
(1) a respective hash value (116, 210) for the SAA; and
(2) the respective informational package, wherein the respective informational package includes:
first information about why the SAA was flagged, and
second information about remedial options, if any, available for mitigating the cause of the SAA being flagged.

11. The system (100) of claim 10, wherein, for a given entry (115) within the data structure (112, 114, 124):
the first information is obtained using crowdsourcing, analytics services, machine learning models trained to identify natures of SAAs, or some combination thereof; and
the second information is obtained by determining whether an updated version of the software application (104) is available and does not utilize the particular SAA.

12. The system (100) of claim 8, wherein the plurality of SAAs comprises:
code directories, source code files, executable files, configuration files, library files, database files,
resource files, markup and stylesheet files, script files, configuration files, documentation files, log files,
temporary files, binary data files, license files, version control files, or some combination thereof.

13. The system (100) of claim 9, wherein the steps further include:
analyzing a plurality of supplemental SAAs to flag a supplemental subset of SAAs;
generating a supplemental bloom filter based on the supplemental subset of SAAs;
generating an update package for updating the bloom filter to reflect the supplemental bloom filter;
adding, to the data structure (112, 114, 124), a respective entry (115) for each supplemental SAA in the supplemental subset of SAAs; and
distributing the update package to the at least one computing device to cause the at least one computing device to update the bloom filter to reflect the supplemental bloom filter.

14. The system (100) of claim 8, wherein the request and the respective informational package are transmitted using a secure communication channel that is formed between the management entity (108) and the at least one computing device using a private relay protocol.

## Patentansprüche

1. Verfahren zum Ermöglichen, dass Rechenvorrichtungen (122, 600) Warnungen anzeigen, wenn Softwareanwendungen (104) auf den Rechenvorrichtungen (122, 600) gestartet werden, wobei das Verfahren durch eine Verwaltungsentität (108) Folgendes umfasst:
Analysieren (502) einer Vielzahl von Softwareanwendungs-Assets (106), um eine Teilmenge von Softwareanwendungs-Assets (106), SAAs, zu kennzeichnen;
Erzeugen (504) eines Bloom-Filters basierend auf der Teilmenge von SAAs;
Hinzufügen (506), zu einer Datenstruktur (112, 114, 124), eines jeweiligen Eintrags (115) für jede SAA in der Teilmenge von SAAs;
Verteilen (508) des Bloom-Filters an mindestens eine Rechenvorrichtung der Rechenvorrichtungen (122, 600);
Empfangen (510), von der mindestens einen Rechenvorrichtung, einer Anforderung, um anzugeben, ob eine bestimmte SAA tatsächlich gekennzeichnet wurde, wobei die Anforderung durch die mindestens eine Rechenvorrichtung als Reaktion auf das Identifizieren, unter Verwendung des an die mindestens eine Rechenvorrichtung verteilten Bloom-Filters, dass eine SAA potentiell gekennzeichnet wurde, erzeugt wird;
Bestimmen (512), durch Bezugnahme auf die Datenstruktur (112, 114, 124), dass die bestimmte SAA tatsächlich gekennzeichnet wurde;
Bereitstellen (514), an die mindestens eine Rechenvorrichtung, eines jeweiligen Informationspakets, das mindestens teilweise auf dem jeweiligen Eintrag (115) für die bestimmte SAA basiert, wobei das Informationspaket konfiguriert ist, um in ein Dateisystemattribut integriert zu werden, das der Softwareanwendung zugeordnet ist, die auf der mindestens einen Rechenvorrichtung gespeichert ist, wobei das jeweilige Informationspaket die mindestens eine Rechenvorrichtung veranlasst, in Verbindung mit dem Starten einer Softwareanwendung (104), die die bestimmte SAA auf der mindestens einen Rechenvorrichtung verwendet, eine Warnung anzuzeigen, die mindestens teilweise auf dem jeweiligen Informationspaket basiert, wenn auf das Dateisystemattribut als Teil des Startens der Softwareanwendung zugegriffen wird.

2. Verfahren nach Anspruch 1, wobei das Erzeugen des Bloom-Filters basierend auf der Teilmenge von SAAs für jede SAA in der Teilmenge von SAAs Folgendes umfasst:
Erzeugen, unter Verwendung einer Vielzahl von Hash-Funktionen (208), jeweiliger Hash-Werte (210) für die SAA; und
Konfigurieren des Bloom-Filters gemäß den jeweiligen Hash-Werten (210).

3. Verfahren nach Anspruch 1, wobei innerhalb der Datenstruktur (112, 114, 124) der jeweilige Eintrag (115) für jede SAA in der Teilmenge von SAAs Folgendes beinhaltet:
(1) einen jeweiligen Hash-Wert (116, 210) für die SAA; und
(2) das jeweilige Informationspaket, wobei das jeweilige Informationspaket Folgendes beinhaltet:
erste Informationen darüber, warum die SAA gekennzeichnet wurde, und
zweite Informationen über Abhilfeoptionen, falls vorhanden, die verfügbar sind, um eine Ursache dafür zu mildern, dass die SAA gekennzeichnet wird.

4. Verfahren nach Anspruch 3, wobei für einen gegebenen Eintrag (115) innerhalb der Datenstruktur (112, 114, 124):
die ersten Informationen unter Verwendung von Crowdsourcing, Analysediensten, Maschinenlernmodellen, die trainiert sind, um die Arten von SAAs zu identifizieren, oder einer Kombination davon erhalten werden; und
die zweiten Informationen durch Bestimmen, ob eine aktualisierte Version der Softwareanwendung (104) verfügbar ist und die bestimmte SAA nicht verwendet, erhalten werden.

5. Verfahren nach Anspruch 1, wobei die Vielzahl von SAAs Folgendes umfasst:
Codeverzeichnisse, Quellcodedateien, ausführbare Dateien, Konfigurationsdateien, Bibliotheksdateien, Datenbankdateien, Ressourcendateien, Markup- und Stylesheet-Dateien, Skriptdateien, Konfigurationsdateien, Dokumentationsdateien, Protokolldateien, temporäre Dateien, Binärdatendateien, Lizenzdateien, Versionssteuerdateien oder eine Kombination davon.

6. Verfahren nach Anspruch 2, ferner umfassend:
Analysieren einer Vielzahl von ergänzenden SAAs, um eine ergänzende Teilmenge von SAAs zu kennzeichnen;
Erzeugen eines ergänzenden Bloom-Filters basierend auf der ergänzenden Teilmenge von SAAs;
Erzeugen eines Aktualisierungspakets zum Aktualisieren des Bloom-Filters, um den ergänzenden Bloom-Filter zu reflektieren;
Hinzufügen, zu der Datenstruktur (112, 114, 124), eines jeweiligen Eintrags (115) für jede ergänzende SAA in der ergänzenden Teilmenge von SAAs; und
Verteilen des Aktualisierungspakets an die mindestens eine Rechenvorrichtung, um zu bewirken, dass die mindestens eine Rechenvorrichtung den Bloom-Filter aktualisiert, um den ergänzenden Bloom-Filter zu reflektieren.

7. Verfahren nach Anspruch 1, wobei die Anforderung und das jeweilige Informationspaket unter Verwendung eines sicheren Kommunikationskanals übertragen werden, der zwischen der Verwaltungsentität (108) und der mindestens einen Rechenvorrichtung unter Verwendung eines privaten Relaisprotokolls gebildet wird.

8. System (100), umfassend eine Verwaltungsentität (108) und Rechenvorrichtungen (122, 600), wobei die Verwaltungsentität konfiguriert ist, um zu ermöglichen, dass die Rechenvorrichtungen (122, 600) Warnungen anzeigen, wenn Softwareanwendungen (104) auf den Rechenvorrichtungen (122, 600) gestartet werden, wobei die Verwaltungsentität (108) Folgendes umfasst:
mindestens einen Prozessor; und
mindestens einen Speicher, der Anweisungen speichert, die bei Ausführung durch den mindestens einen Prozessor die Verwaltungsentität (108) veranlassen, Schritte auszuführen, die Folgendes beinhalten:
Analysieren (502) einer Vielzahl von Softwareanwendungs-Assets (106), um eine Teilmenge von Softwareanwendungs-Assets (106), SAAs, zu kennzeichnen;
Erzeugen (504) eines Bloom-Filters basierend auf der Teilmenge von SAAs;
Hinzufügen (506), zu einer Datenstruktur (112, 114, 124), eines jeweiligen Eintrags (115) für jede SAA in der Teilmenge von SAAs;
Verteilen (508) des Bloom-Filters an mindestens eine Rechenvorrichtung der Rechenvorrichtungen (122, 600);
Empfangen (510), von der mindestens einen Rechenvorrichtung, einer Anforderung, um anzugeben, ob eine bestimmte SAA tatsächlich gekennzeichnet wurde, wobei die Anforderung durch die mindestens eine Rechenvorrichtung als Reaktion auf das Identifizieren, unter Verwendung des an die mindestens eine Rechenvorrichtung verteilten Bloom-Filters, dass eine SAA potentiell gekennzeichnet wurde, erzeugt wird;
Bestimmen (512), durch Bezugnahme auf die Datenstruktur (112, 114, 124), dass die bestimmte SAA tatsächlich gekennzeichnet wurde;
Bereitstellen (514), an die mindestens eine Rechenvorrichtung, eines jeweiligen Informationspakets, das mindestens teilweise auf dem jeweiligen Eintrag (115) für die bestimmte SAA basiert, wobei das Informationspaket konfiguriert ist, um in ein Dateisystemattribut integriert zu werden, das der Softwareanwendung zugeordnet ist, die auf der mindestens einen Rechenvorrichtung gespeichert ist, wobei das jeweilige Informationspaket die mindestens eine Rechenvorrichtung veranlasst, in Verbindung mit dem Starten einer Softwareanwendung (104), die die bestimmte SAA auf der mindestens einen Rechenvorrichtung verwendet, eine Warnung anzuzeigen, die mindestens teilweise auf dem jeweiligen Informationspaket basiert, wenn auf das Dateisystemattribut als Teil des Startens der Softwareanwendung zugegriffen wird.

9. System (100) nach Anspruch 8, wobei das Erzeugen des Bloom-Filters basierend auf der Teilmenge von SAAs für jede SAA in der Teilmenge von SAAs Folgendes umfasst:
Erzeugen, unter Verwendung einer Vielzahl von Hash-Funktionen (208), jeweiliger Hash-Werte (210) für die SAA; und
Konfigurieren des Bloom-Filters gemäß den jeweiligen Hash-Werten (210).

10. System (100) nach Anspruch 8, wobei innerhalb der Datenstruktur (112, 114, 124) der jeweilige Eintrag (115) für jede SAA in der Teilmenge von SAAs Folgendes beinhaltet:
(1) einen jeweiligen Hash-Wert (116, 210) für die SAA; und
(2) das jeweilige Informationspaket, wobei das jeweilige Informationspaket Folgendes beinhaltet:
erste Informationen darüber, warum die SAA gekennzeichnet wurde, und
zweite Informationen über Abhilfeoptionen, falls vorhanden, die verfügbar sind, um die Ursache dafür zu mildern, dass die SAA gekennzeichnet wird.

11. System (100) nach Anspruch 10, wobei für einen gegebenen Eintrag (115) innerhalb der Datenstruktur (112, 114, 124):
die ersten Informationen unter Verwendung von Crowdsourcing, Analysediensten, Maschinenlernmodellen, die trainiert sind, um die Arten von SAAs zu identifizieren, oder einer Kombination davon erhalten werden; und
die zweiten Informationen durch Bestimmen, ob eine aktualisierte Version der Softwareanwendung (104) verfügbar ist und die bestimmte SAA nicht verwendet, erhalten werden.

12. System (100) nach Anspruch 8, wobei die Vielzahl von SAAs Folgendes umfasst: Codeverzeichnisse, Quellcodedateien, ausführbare Dateien, Konfigurationsdateien, Bibliotheksdateien, Datenbankdateien, Ressourcendateien, Markup- und Stylesheet-Dateien, Skriptdateien, Konfigurationsdateien, Dokumentationsdateien, Protokolldateien, temporäre Dateien, Binärdatendateien, Lizenzdateien, Versionssteuerdateien oder eine Kombination davon.

13. System (100) nach Anspruch 9, wobei die Schritte ferner Folgendes beinhalten:
Analysieren einer Vielzahl von ergänzenden SAAs, um eine ergänzende Teilmenge von SAAs zu kennzeichnen;
Erzeugen eines ergänzenden Bloom-Filters basierend auf der ergänzenden Teilmenge von SAAs;
Erzeugen eines Aktualisierungspakets zum Aktualisieren des Bloom-Filters, um den ergänzenden Bloom-Filter zu reflektieren;
Hinzufügen, zu der Datenstruktur (112, 114, 124), eines jeweiligen Eintrags (115) für jede ergänzende SAA in der ergänzenden Teilmenge von SAAs; und
Verteilen des Aktualisierungspakets an die mindestens eine Rechenvorrichtung, um zu bewirken, dass die mindestens eine Rechenvorrichtung den Bloom-Filter aktualisiert, um den ergänzenden Bloom-Filter zu reflektieren.

14. System (100) nach Anspruch 8, wobei die Anforderung und das jeweilige Informationspaket unter Verwendung eines sicheren Kommunikationskanals übertragen werden, der zwischen der Verwaltungsentität (108) und der mindestens einen Rechenvorrichtung unter Verwendung eines privaten Relaisprotokolls gebildet wird.

## Revendications

1. Un procédé pour permettre à des dispositifs informatiques (122, 600) d'afficher des alertes lorsque des applications logicielles sont lancées sur les dispositifs informatiques (122, 600), le procédé comprenant, par une entité de gestion (108) :
l'analyse (502) d'une pluralité de ressources applicatives logicielles (106) pour marquer un sous-ensemble de ressources applicatives logicielles (106), SAA ;
la génération (504) d'un filtre de Bloom sur la base du sous-ensemble de SAA ;
l'ajout (506), à une structure de données (112, 114, 124), d'une rubrique respective (115) pour chaque SAA du sous-ensemble de SAA ;
la distribution (508) du filtre de Bloom à au moins un dispositif informatique des dispositifs informatiques (122, 600) ;
la réception (510), en provenance de l'au moins un dispositif informatique, d'une requête pour indiquer si une SAA particulière a été ou non effectivement marquée, la requête étant générée par l'au moins un dispositif informatique en réponse à l'identification, à l'aide du filtre de Bloom distribué à l'au moins un dispositif informatique, qu'une SAA a été potentiellement marquée ;
la détermination (512), par référencement de la structure de données (112, 114, 124), que la SAA particulière a été effectivement marquée ;
la délivrance (514), à l'au moins un dispositif informatique, d'un package d'informations respectif qui est au moins en partie basé sur la rubrique respective (115) pour la SAA particulière, le package d'informations étant configuré pour être incorporé dans un attribut de système de fichiers associé à l'application logicielle qui est stocké sur l'au moins un dispositif informatique, le package d'informations faisant en sorte que l'au moins un dispositif informatique, en association avec le lancement d'une application logicielle (104) qui utilise la SAA particulière sur l'au moins un dispositif informatique, affiche une alerte qui est au moins en partie basée sur le package d'informations respectif lorsque l'attribut de système de fichiers est accédé en tant que partie du lancement de l'application logicielle.

2. Le procédé de la revendication 1, dans lequel la génération du filtre de Bloom sur la base du sous-ensemble de SAA comprend, pour chaque SAA du sous-ensemble de SAA :
la génération, à l'aide d'une pluralité de fonctions de hachage (208), de valeurs de hachage respectives (210) pour la SAA ; et
la configuration du filtre de Bloom conformément aux valeurs de hachage respectives (210).

3. Le procédé de la revendication 1, dans lequel, à l'intérieur de la structure de données (112, 114, 124), la rubrique respective (115) pour chaque SAA du sous-ensemble de SAA comprend :
(1) une valeur de hachage respective (116, 210) pour la SAA ; et
(2) le package d'informations respectif, le package d'informations respectif comprenant :
une première information sur la raison pour laquelle la SAA avait été marquée, et
une seconde information sur des options correctrices, le cas échéant, disponibles pour pallier une raison pour laquelle la SAA avait été marquée.

4. Le procédé de la revendication 3, dans lequel, pour une rubrique donnée (115) à l'intérieur de la structure de données (112, 114, 124) :
la première information est obtenue à l'aide d'un processus collaboratif, de services analytiques, de modèles d'apprentissage machine entraînés pour identifier les natures des SAA, ou toute combinaison des précédents ; et
la seconde information est obtenue en déterminant si une version mise à jour de l'application logicielle (104) est ou non disponible et n'utilise pas la SAA particulière.

5. Le procédé de la revendication 1, dans lequel la pluralité de SAA comprend :
des répertoires de code, des fichiers de code source, des fichiers exécutables, des fichiers de configuration, des fichiers de bibliothèque, des fichiers de base de données, des fichiers de ressources, des fichiers de markup et de feuilles de style, des fichiers de script, des fichiers de configuration, des fichiers de documentation, des fichiers de journalisation, des fichiers temporaires, des fichiers de données binaires, des fichiers de licence, des fichiers de contrôle de version, ou toute combinaison des précédents.

6. Le procédé de la revendication 2, comprenant en outre :
l'analyse d'une pluralité de SAA supplémentaires pour marquer un sous-ensemble supplémentaire de SAA ;
la génération d'un filtre de Bloom supplémentaire basé sur le sous-ensemble supplémentaire de SAA ;
la génération d'un package de mises à jour pour la mise à jour du filtre de Bloom pour refléter le filtre de Bloom supplémentaire ;
l'ajout, à la structure de données (112, 114, 124), d'une rubrique respective (115) pour chaque SAA supplémentaire du sous-ensemble supplémentaire de SAA ; et
la distribution du package mis à jour à l'au moins un dispositif informatique pour faire en sorte que l'au moins un dispositif informatique mette à jour le filtre de Bloom pour refléter le filtre de Bloom supplémentaire.

7. Le procédé de la revendication 1, dans lequel la requête et le package d'informations respectif sont transmis à l'aide d'un canal de communication sécurisé qui est formé entre l'entité de gestion (108) et l'au moins un dispositif informatique en utilisant un protocole de relai privé.

8. Un système (100) comprenant une entité de gestion (108) et des dispositifs informatiques (122, 600), l'entité de gestion étant configurée pour permettre aux dispositifs informatiques (122, 600) d'afficher des alertes lorsque les applications logicielles (104) sont lancées sur les dispositifs informatiques (122, 600), l'entité de gestion (108) comprenant :
au moins un processeur ; et
au moins une mémoire stockant des instructions qui, lorsqu'elles sont exécutées par l'au moins un processeur, font en sorte que l'entité de gestion (108) effectue des étapes qui comprennent :
l'analyse (502) d'une pluralité de ressources applicatives logicielles (106) pour marquer un sous-ensemble de ressources applicatives logicielles (106), SAA ;
la génération (504) d'un filtre de Bloom sur la base du sous-ensemble de SAA ;
l'ajout (506), à une structure de données (112, 114, 124), d'une rubrique respective (115) pour chaque SAA du sous-ensemble de SAA ;
la distribution (508) du filtre de Bloom à au moins un dispositif informatique des dispositifs informatiques (122, 600) ;
la réception (510), en provenance de l'au moins un dispositif informatique, d'une requête pour indiquer si une SAA particulière a été ou non effectivement marquée, la requête étant générée par l'au moins un dispositif informatique en réponse à l'identification, à l'aide du filtre de Bloom distribué à l'au moins un dispositif informatique, qu'une SAA a été potentiellement marquée ;
la détermination (512), par référencement de la structure de données (112, 114, 124), que la SAA particulière a été effectivement marquée ;
la délivrance (514), à l'au moins un dispositif informatique, d'un package d'informations respectif qui est au moins en partie basé sur la rubrique respective (115) pour la SAA particulière, le package d'informations étant configuré pour être incorporé dans un attribut de système de fichiers associé à l'application logicielle qui est stocké sur l'au moins un dispositif informatique, le package d'informations faisant en sorte que l'au moins un dispositif informatique, en association avec le lancement d'une application logicielle (104) qui utilise la SAA particulière sur l'au moins un dispositif informatique, affiche une alerte qui est au moins en partie basée sur le package d'informations respectif lorsque l'attribut de système de fichiers est accédé en tant que partie du lancement de l'application logicielle.

9. Le système (100) de la revendication 8, dans lequel la génération du filtre de Bloom sur la base du sous-ensemble de SAA comprend, pour chaque SAA du sous-ensemble de SAA :
la génération, à l'aide d'une pluralité de fonctions de hachage (208), de valeurs de hachage respectives (210) pour la SAA ; et
la configuration du filtre de Bloom conformément aux valeurs de hachage respectives (210).

10. Le système (100) de la revendication 8, dans lequel, à l'intérieur de la structure de données (112, 114, 124), la rubrique respective (115) pour chaque SAA du sous-ensemble de SAA comprend :
(1) une valeur de hachage respective (116, 210) pour la SAA ; et
(2) le package d'informations respectif, le package d'informations respectif comprenant :
une première information sur la raison pour laquelle la SAA avait été marquée, et
une seconde information sur des options correctrices, le cas échéant, disponibles pour pallier une raison pour laquelle la SAA avait été marquée.

11. Le système (100) de la revendication 10, dans lequel, pour une rubrique donnée (115) à l'intérieur de la structure de données (112, 114, 124) :
la première information est obtenue à l'aide d'un processus collaboratif, de services analytiques, de modèles d'apprentissage machine entraînés pour identifier les natures des SAA, ou toute combinaison des précédents ; et
la seconde information est obtenue en déterminant si une version mise à jour de l'application logicielle (104) est ou non disponible et n'utilise pas la SAA particulière.

12. Le système (100) de la revendication 8, dans lequel la pluralité de SAA comprend :
des répertoires de code des fichiers de code source, des fichiers exécutables, des fichiers de configuration, des fichiers de bibliothèque, des fichiers de base de données, des fichiers de ressources, des fichiers de markup et de feuilles de style, des fichiers de script, des fichiers de configuration, des fichiers de documentation, des fichiers de journalisation, des fichiers temporaires, des fichiers de données binaires, des fichiers de licence, des fichiers de contrôle de version, ou toute combinaison des précédents.

13. Le système (100) de la revendication 9, dans lequel les étapes comprennent en outre :
l'analyse d'une pluralité de SAA supplémentaires pour marquer un sous-ensemble supplémentaire de SAA ;
la génération d'un filtre de Bloom supplémentaire basé sur le sous-ensemble supplémentaire de SAA ;
la génération d'un package de mises à jour pour la mise à jour du filtre de Bloom pour refléter le filtre de Bloom supplémentaire ;
l'ajout, à la structure de données (112, 114, 124), d'une rubrique respective (115) pour chaque SAA supplémentaire du sous-ensemble supplémentaire de SAA ; et
la distribution du package mis à jour à l'au moins un dispositif informatique pour faire en sorte que l'au moins un dispositif informatique mette à jour le filtre de Bloom pour refléter le filtre de Bloom supplémentaire.

14. Le système (100) de la revendication 8, dans lequel la requête et le package d'informations respectif sont transmis à l'aide d'un canal de communication sécurisé qui est formé entre l'entité de gestion (108) et l'au moins un dispositif informatique en utilisant un protocole de relai privé.
